# DEMANDE DE BREVET EUROPEEN

(11) **EP 4 016 333 A1**
(43) Date de publication de la demande: **22.06.2022**
(21) Numéro de dépôt: 20214041.4
(22) Date de dépôt: 15.12.2020
(51) Int. Cl.: G06F 16/904

(54) **SUPPORT D'ENREGISTREMENT ET PROCÉDÉ ASSOCIÉ POUR LA PROPAGATION D'UN ATTRIBUT D'UN OBJET DE DONNÉES DANS UN SYSTÈME D'ANALYSE DE DONNÉES**

(71) Demandeur: Atos Integration SAS, 95870 Bezons (FR)
(72) Inventeur: BRUNET, Philippe, 94700 Maisons-Alfort (FR)
(74) Mandataire: Novagraaf Technologies

(57) **Abrégé**

L'invention concerne un procédé (200) mis en œuvre par ordinateur destiné à être utilisé dans un système d'analyse de données.

L'un des objets de l'invention est d'estimer l'intérêt d'un objet de données qui provient d'une source de données de renseignent, et qui n'a pas reçu d'évaluation de son intérêt par un utilisateur.

Pour cela l'invention propose de calculer l'intérêt de tels objets de données sur la base des relations sémantiques que ces objets de données entretiennent avec d'autres objets de données pour lesquels un utilisateur a exprimé un intérêt.

En d'autres termes, l'invention propose de propager l'évaluation de l'intérêt réalisé par un utilisateur pour au moins un objet de données particulier, à tout ou partie des objets de données non évalués par l'utilisateur auxquels cet objet de données particulier est relié sémantiquement.

Enfin, l'invention propose le calcul d'un attribut de réputation pour chaque source de données de renseignent à partir des évaluations de l'intérêt des objets de données qui en sont issus.

## Description

### Domaine technique

L'invention concerne le domaine des équipements et méthodes de traitement de données spécialement adaptés à des fonctions spécifiques. En particulier, il concerne un procédé mis en œuvre par ordinateur destiné à être utilisé dans un système d'analyse de données. L'invention concerne également un support d'enregistrement associé au procédé.

### Technique antérieure

On connait des plateformes informatiques d'analyse de données.

De telles plateformes informatiques remplissent généralement trois missions. La première mission, dite d'enquête, permet de reconstituer le cours passé des agissements (actions, déplacements, contacts, etc.) de suspects liés à un ou des événements objets d'une investigation. La seconde mission, dite de suivi, permet d'être informé en permanence sur le cours présent des agissements de groupes de personnes susceptibles d'entreprises illégales. La troisième mission, dite de surveillance, est relative à la détection de signaux avant-coureurs d'événements ou à celle d'indices d'entreprises illégales. Les données de communications et de localisation qui leur sont liées constituent une source de données de plus en plus importante pour ces plateformes.

Pour fonctionner, de telles plateformes informatiques importent des données puis réalisent des traitements automatiques de ces données pour en extraire une pluralité d'objets de données ainsi que des relations sémantiques entre eux.

En fonctionnement, ces plateformes informatiques permettent aux utilisateurs de consulter un objet de données et également de modifier ses attributs.

L'un de ces attributs, appelé intérêt, exprime l'importance d'un objet de données dans la problématique métier de l'utilisateur.

Du fait du grand nombre d'objets de données que ces plateformes informatiques gèrent, un utilisateur n'a pas la capacité d'évaluer l'intérêt de chacun d'entre eux.

Ainsi, les utilisateurs de ces plateformes informatiques ne peuvent pas résoudre leurs problématiques métier, car de nombreux objets de données qui n'ont pas reçu d'évaluation peuvent échapper à l'analyse de l'utilisateur ou y entrer tardivement. À l'inverse, une plateforme informatique qui fournit à l'utilisateur un trop grand nombre d'objets, faute d'avoir pris ses notes d'intérêt en considération, nuit également à l'efficience de cet utilisateur.

### Résumé de l'invention

L'invention vise à pallier cet inconvénient.

L'invention vise en particulier un procédé mis en œuvre par ordinateur destiné à être utilisé dans un système d'analyse de données. Notamment, le système d'analyse de données est configuré pour,
- recevoir au moins un fichier de données qui comprend des objets de données, chacun des objets de données incluant au moins un attribut,
- extraire les objets de données du fichier de données,
- créer un réseau de cognition sémantique à partir des attributs de tout ou partie des objets de données, le réseau de cognition sémantique définissant des relations sémantiques entre des nœuds qui sont représentatifs des objets de données, et
- autoriser un utilisateur à sélectionner et affecter manuellement à au moins un premier nœud du réseau de cognition sémantique, un attribut d'intérêt, dit attribut d'intérêt d'attribution directe, qui, dans le cadre d'un processus métier prédéterminé, est représentatif d'un intérêt de l'utilisateur pour l'objet de données associé au premier nœud.

Dans l'invention, le procédé est caractérisé en ce qu'il comprend, en réponse à l'apparition d'une condition de déclenchement qui implique au moins un changement au niveau du réseau de cognition sémantique, - une étape de propagation de l'attribut d'intérêt d'attribution directe du premier nœud à des nœuds environnants du premier nœud, suivant un ordre de propagation dans le réseau de cognition sémantique et sur la base d'une fonction d'affaiblissement de l'attribut d'intérêt d'attribution directe qui dépend de la nature de la relation entre le premier nœud et les nœuds environnants.

Dans une première mise en œuvre, la nature de la relation inclut une distance de réseau entre le premier nœud et les nœuds environnants. Dans ce cas, l'étape de propagation comprend,
- une première étape qui consiste à calculer une distance, dans le réseau de cognition sémantique, entre une position du premier nœud et une position de chaque nœud environnant,
- une première étape de calcul d'un attribut d'intérêt, dit attribut d'intérêt d'attribution calculée, pour chaque nœud environnant, en fonction de l'attribut d'intérêt d'attribution directe du premier nœud, de la fonction d'affaiblissement et de la distance associée au nœud environnant, et
- une étape d'affectation à chaque nœud environnant de l'attribut d'intérêt d'attribution calculée.

Dans une deuxième mise en œuvre, la nature de la relation inclut une mesure d'importance de la relation sémantique, dit degré de relation, entre le premier nœud et les nœuds environnants. Dans ce cas, l'étape de propagation comprend,
- une première étape qui consiste à obtenir une mesure, dans le réseau de cognition sémantique, d'un degré de relation sémantique entre le premier nœud et le nœud environnant,
- une première étape de calcul d'un attribut d'intérêt, dit attribut d'intérêt d'attribution calculée, pour chaque nœud environnant, en fonction de l'attribut d'intérêt d'attribution directe du premier nœud, de la fonction d'affaiblissement et de la mesure du degré de relation sémantique entre le premier nœud et le nœud environnant, et
- une étape d'affectation à chaque nœud environnant de l'attribut d'intérêt d'attribution calculée.

Dans une troisième mise en œuvre, le procédé selon l'invention comprend en outre, avant la première étape,
- une première étape de vérification si le nœud environnant courant comprend un attribut d'intérêt d'attribution directe, et
- dans l'affirmative, la poursuite du procédé à la première étape pour le nœud environnant suivant, en omettant la première étape pour le nœud environnant courant, ou
- dans la négative, la poursuite du procédé à la première étape pour le nœud environnant courant.

Dans une quatrième mise en œuvre, le procédé selon l'invention comprend en outre, avant l'étape d'affectation au nœud environnant courant de l'attribut d'intérêt d'attribution calculée, dit premier attribut d'intérêt d'attribution calculée,
- une deuxième étape de vérification si le nœud environnant courant comprend un attribut d'intérêt d'attribution calculée, dit deuxième attribut d'intérêt d'attribution calculée, et si le deuxième attribut d'intérêt d'attribution calculée est supérieur au premier attribut d'intérêt d'attribution calculée, et
- dans l'affirmative, la poursuite du procédé à la première étape pour le nœud environnant suivant, en omettant l'étape d'affectation pour le nœud environnant courant, ou
- dans la négative, la poursuite du procédé à l'étape d'affectation au nœud environnant courant du premier attribut d'intérêt d'attribution calculée.

Dans une cinquième mise en œuvre, le procédé selon l'invention comprend en outre, avant l'étape d'affectation au nœud environnant courant de l'attribut d'intérêt d'attribution calculée, dit premier attribut d'intérêt d'attribution calculée,
- une troisième étape de vérification si le nœud environnant courant comprend un attribut d'intérêt d'attribution calculée, dit deuxième attribut d'intérêt d'attribution calculée, et si le deuxième attribut d'intérêt d'attribution calculée a été obtenu à partir de la propagation de l'attribut d'intérêt d'attribution directe d'un deuxième nœud du réseau de cognition sémantique qui est différent du premier nœud, et
- dans l'affirmative, le procédé comprend une deuxième étape de calcul d'une somme entre le premier attribut d'intérêt d'attribution calculée et le deuxième attribut d'intérêt d'attribution calculée, et la poursuite du procédé à l'étape d'affectation pour le nœud environnant courant avec la somme, ou
- dans la négative, la poursuite du procédé à l'étape d'affectation au nœud environnant courant du premier attribut d'intérêt d'attribution calculée.

Dans une sixième mise en œuvre, le procédé selon l'invention comprend en outre, en réponse à la satisfaction d'une condition d'arrêt prédéterminée, - une étape d'arrêt de propagation de l'attribut d'intérêt d'attribution directe, sur la base d'au moins un attribut d'intérêt d'attribution calculée affecté à un nœud environnant.

Dans un premier exemple de la sixième mise en œuvre, l'étape d'arrêt de propagation de l'attribut d'intérêt comprend une première étape de comparaison entre, d'une part, au moins un attribut d'intérêt d'attribution calculée affecté à un nœud environnant, et d'autre part, une première valeur de seuil prédéterminée.

Dans un deuxième exemple de la sixième mise en œuvre, l'étape d'arrêt de propagation de l'attribut d'intérêt comprend une deuxième étape de comparaison entre, d'une part, une variation d'une différence d'attributs d'intérêt d'attribution calculée pour deux nœuds environnants pris deux à deux consécutivement selon l'ordre de propagation, et d'autre part, une deuxième valeur de seuil prédéterminée.

Dans une septième mise en œuvre, les nœuds environnants sont sélectionnés parmi : un nombre de nœuds qui sont des enfants du premier nœud, un nombre de nœuds qui sont apparentés au premier nœud, et un nombre de nœuds qui sont des enfants d'un nombre de nœuds qui sont apparentés au premier nœud.

Dans une huitième mise en œuvre, la fonction d'affaiblissement est une fonction sélectionnée parmi : une fonction de décroissance exponentielle, une fonction de décroissance constante, une fonction de décroissance par palier, une fonction de décroissance linéaire, et une fonction de décroissance compacte et homogène (« smooth-compact decay function », en anglais).

Dans une neuvième mise en œuvre, la condition de déclenchement comprend un changement sélectionné parmi : un changement de la topologie du réseau de cognition sémantique, l'affectation d'un attribut d'intérêt d'attribution directe à un nœud du réseau de cognition sémantique et le changement d'un paramètre lié au mécanisme de propagation.

Dans une dixième mise en œuvre, le procédé selon l'invention comprend l'utilisation d'un attribut de confiance qui quantifie la confiance que reflète un attribut d'intérêt affecté à un nœud du réseau de cognition sémantique, dans le cadre du processus métier prédéterminé, un intérêt réel pour l'objet de données associé. Par ailleurs, le procédé comprend en outre les étapes suivantes,
- une étape d'affectation automatique aux nœuds qui possèdent un attribut d'intérêt d'attribution directe, dits nœuds de diffusion, d'un attribut de confiance avec une première valeur, et
- une première étape de calcul et d'affectation, aux nœuds qui possèdent un attribut d'intérêt d'attribution calculée, dits nœuds de réception, d'un attribut de confiance avec une deuxième valeur inférieure à la première valeur, la deuxième valeur étant calculé à partir de la première valeur affectée à au moins l'un des nœuds de diffusion qui est lié au nœud de réception courant.

Dans une onzième mise en œuvre, le fichier de données provient d'au moins une source de données, le procédé comprenant une deuxième étape de calcul et d'affectation à la source de données, d'un attribut de réputation qui quantifie la réputation de la source de données sur la base au moins des attributs d'intérêt qui sont affectés aux nœuds représentatifs des objets de données qui sont issus de la source de données.

Dans une douzième mise en œuvre lorsqu'elle dépend de la dixième mise en œuvre, le procédé selon l'invention comprend en outre une troisième étape de calcul et d'affectation, à la source de données, d'un attribut de confiance avec une valeur qui est calculée à partir des attributs de confiance des nœuds représentatifs des objets de données qui sont issus de la source de données.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un système d'analyse de données selon l'invention.
[Fig. 2] La figure 2 représente un procédé de mise en œuvre de l'invention.

Les figures ne respectent pas nécessairement les échelles, notamment en épaisseur, et ce à des fins d'illustration.

### Description des modes de réalisation

### Premier objet de l'invention : estimation de l'intérêt d'un objet de données

Un des objets de l'invention est d'estimer l'intérêt d'un objet de données qui n'a pas reçu d'évaluation de son intérêt par un utilisateur. Par ailleurs, l'évaluation d'un intérêt doit pouvoir être explicable.

Pour cela, l'invention propose de calculer l'intérêt de tels objets de données sur la base des relations sémantiques que ces objets de données entretiennent avec d'autres objets de données pour lesquels un utilisateur a exprimé un intérêt.

En d'autres termes, l'invention propose de propager l'évaluation de l'intérêt réalisé par un utilisateur pour au moins un objet de données particulier, à tout ou partie des objets de données non évalués par l'utilisateur auxquels cet objet de données particulier est relié sémantiquement.

En particulier, l'invention se rapporte à un procédé mis en œuvre par ordinateur qui est destiné à être utilisé dans un système d'analyse de données.

Dans un exemple non limitatif, les données selon l'invention sont des données de renseignement. Toutefois, l'invention peut s'appliquer à d'autres types de données dont il est nécessaire d'évaluer l'intérêt.

Dans une première mise en œuvre particulière, les données comprennent des informations issues de l'interception de télécommunications, dites données du domaine « COMINT » (« Communications Intelligence », en anglais ; renseignement issu de l'interception de télécommunications, en français).

Dans une deuxième mise en œuvre particulière, les données comprennent des informations issues de la collecte de données publiées par des organisations ou des individus, dites données du domaine « OSINT » (« Open Source Intelligence », en anglais ; renseignement issu de l'interception de sources ouvertes, en français).

Dans une troisième mise en œuvre particulière, les données comprennent des informations issues de la collecte de données de relations sociales ou réseaux sociaux, dites données du domaine « SOCMINT » (« Social Media Intelligence », en anglais ; renseignement issu de l'interception de réseaux sociaux, en français).

Dans l'invention, le système d'analyse de données (ci-après, simplement désigné « système ») est configuré pour réaliser une pluralité de fonctions associées au traitement des données.

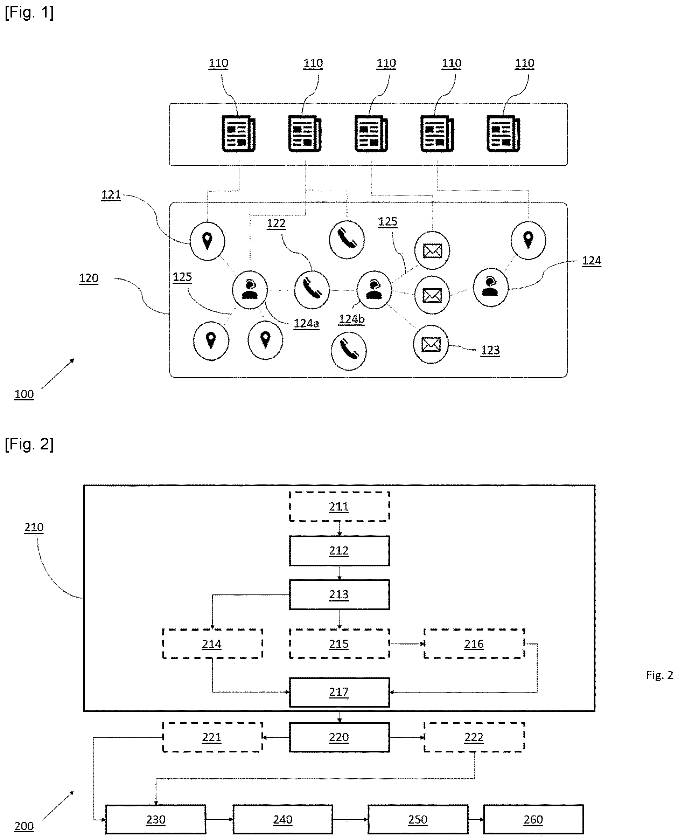

La figure 1 illustre un exemple de système 100 selon l'invention.

Une première fonction du système réceptionne au moins un fichier de données qui comprend des objets de données, chacun des objets de données incluant au moins un attribut.

Dans l'invention, le fichier de données provient d'au moins une source de données 110.

De manière classique, une source de données est un capteur adapté pour intercepter des communications dans un réseau de télécommunications. De tels capteurs peuvent relever d'entités tierces différentes comme les opérateurs de télécommunication ou les forces de sécurité intérieure ou extérieure d'un État.

Une deuxième fonction du système extrait, de manière connue, des objets de données du fichier de données.

Une troisième fonction du système crée, de manière connue, un réseau de cognition sémantique 120 à partir des attributs de tout ou partie des objets de données. Dans l'invention, le réseau de cognition sémantique 120 définit des relations sémantiques 125 entre des nœuds 121, 122, 123, 124 qui sont représentatifs des objets de données.

On entend par nœud, une unité de base d'une structure de données, telle qu'une liste liée ou arbre structure de données. Les nœuds contiennent des données et peuvent également être liés à d'autres nœuds. Les liens entre les nœuds sont souvent mis en oeuvre par des pointeurs.

De manière connue, chaque relation sémantique représente une mesure d'un degré de relation sémantique entre des nœuds 121, 122, 123, 124.

Dans un premier exemple de la mise en oeuvre particulière, on définit le degré de relation sémantique selon une échelle ordonnée de valeurs numériques continue, par exemple, de manière non limitative, entre les valeurs 1 et 10.

Dans un deuxième exemple de la mise en œuvre particulière, on définit le degré de relation sémantique selon une échelle ordonnée de valeurs numériques discrètes, par exemple, de manière non limitative, entre les valeurs « est un ami de », «est un membre de la famille de », « connait » et « communique avec ». Dans ce cas, chaque valeur discrète présente une signification sémantique particulière.

Enfin, une quatrième fonction du système autorise, de manière connue, un utilisateur à sélectionner et affecter manuellement à au moins un premier nœud du réseau de cognition sémantique 120, un attribut d'intérêt, dit attribut d'intérêt d'attribution directe. Dans l'invention, l'intérêt d'attribution est, dans le cadre d'un processus métier prédéterminé, une valeur numérique représentative d'un intérêt de l'utilisateur pour l'objet de données qui est associé au premier nœud.

Dans une mise en œuvre particulière, l'attribut d'intérêt est associé à une notation entre une valeur minimale et une valeur maximale.

Dans un premier exemple de la mise en œuvre particulière, la première valeur minimale et une deuxième valeur maximale définissent une échelle ordonnée de valeurs numériques continue, par exemple, de manière non limitative, entre les valeurs 0 et 5.

Dans un deuxième exemple de la mise en œuvre particulière, la première valeur minimale et une deuxième valeur maximale définissent une échelle ordonnée de valeurs numériques discrètes, par exemple, de manière non limitative, entre les valeurs A, B, C, D et E. Dans ce cas, chaque valeur discrète présente une signification sémantique particulière.

Dans un exemple de la quatrième fonction, dans le cadre d'une enquête relative à un crime ou à un délit, l'utilisateur du système pourra exprimer un intérêt fort égal à la valeur maximale, pour une personne, un lieu ou une entreprise qui est considérée comme suspecte dans l'enquête. Par contre, l'utilisateur pourra exprimer un intérêt modéré égal à une valeur inférieure à la valeur maximale pour une personne, un lieu ou une entreprise non suspecte dans l'enquête, mais entretenant une relation particulière avec la personne suspecte.

La figure 2 illustre un procédé 200 selon l'invention.

Tout d'abord, on notera que dans l'invention on déclenche le procédé 200 en réponse à l'apparition d'une condition de déclenchement qui implique au moins un changement au niveau du réseau de cognition sémantique 120.

Dans une mise en œuvre particulière, la condition de déclenchement comprend un changement de la topologie du réseau de cognition sémantique 120.

Dans un premier exemple, le changement de la topologie du réseau de cognition sémantique 120 correspond à la suppression d'un nœud 121, 122, 123, 124 ou d'une relation sémantique 125 entre des nœuds 121, 122, 123, 124.

Dans un deuxième exemple, le changement de la topologie du réseau de cognition sémantique 120 correspond à l'ajout d'un nœud 121, 122, 123, 124 ou d'une relation sémantique 125 entre des nœuds 121, 122, 123, 124.

Toujours dans la figure 2, le procédé 200 comprend une étape de propagation 210 de l'attribut d'intérêt d'attribution directe du premier nœud à des nœuds environnants du premier nœud, suivant un ordre de propagation dans le réseau de cognition sémantique 120.

On entend par nœud environnant du premier nœud, les nœuds 121, 122, 123, 124 du réseau de cognition sémantique 120 qui possèdent au moins une relation sémantique 125 directe ou indirecte avec le premier nœud.

Dans l'exemple de la figure 2, les nœuds 124a et 122 sont connectés par une liaison sémantique directe, tandis que les nœuds 124a et 124b sont connectés par une liaison sémantique indirecte.

De manière plus générale, dans une première mise en œuvre, les nœuds environnants comprennent un nombre de nœuds 121, 122, 123, 124 qui sont des enfants du premier nœud.

On entend par nœud enfant, un nœud qui s'étend à partir d'un autre nœud. La relation inverse est celle d'un nœud parent. Ainsi, si un nœud C est un enfant d'un nœud A, alors A est le nœud parent de C.

Dans une deuxième mise en œuvre, les nœuds environnants comprennent un nombre de nœuds 121, 122, 123, 124 qui sont apparentés au premier nœud.

Dans une troisième mise en œuvre, les nœuds environnants comprennent un nombre de nœuds 121, 122, 123, 124 qui sont des enfants d'un nombre de nœuds 121, 122, 123, 124 qui sont apparentés au premier nœud.

De retour à la figure 2, on réalise l'étape de propagation 210 sur la base d'une fonction d'affaiblissement de l'attribut d'intérêt d'attribution directe. En particulier, dans l'invention la fonction d'affaiblissement dépend de la nature de la relation entre le premier nœud et les nœuds environnants.

Dans une première mise en œuvre, la nature de la relation inclut une distance de réseau entre le premier nœud et les nœuds environnants.

Dans une deuxième mise en œuvre, la nature de la relation inclut une mesure d'importance de la relation sémantique, dit degré de relation, entre le premier nœud et les nœuds environnants.

Dans un premier exemple, la fonction d'affaiblissement est une fonction de décroissance exponentielle.

Dans un deuxième exemple, la fonction d'affaiblissement est une fonction de décroissance constante.

Dans un troisième exemple, la fonction d'affaiblissement est une fonction de décroissance par palier.

Dans un quatrième exemple, la fonction d'affaiblissement est une fonction de décroissance linéaire.

Dans un cinquième exemple, la fonction d'affaiblissement est une fonction de décroissance compacte et homogène (« smooth-compact decay function », en anglais).

Dans une mise en œuvre de l'étape de propagation 210, le procédé 200 comprend en outre les étapes suivantes.

Dans un premier mode de réalisation de cette mise en œuvre de l'étape de propagation 210, le procédé 200 comprend une première étape 212 qui consiste à calculer une distance, dans le réseau de cognition sémantique 120, entre une position du premier nœud et une position de chaque nœud environnant.

Par exemple, en référence à la figure 1, on pourra considérer que la distance entre deux nœuds 121, 122, 123, 124 vaut 1. Ainsi, dans la figure 1, la distance entre les nœuds 124a et 122 vaudrait 1 tandis que la distance entre les nœuds 124a et 124b vaudrait 2.

Toutefois, on pourra envisager d'autres règles de mesure d'une distance dans le réseau de cognition sémantique 120, sans nécessiter de modifications substantielles de l'invention.

Dans un deuxième mode de réalisation de cette mise en œuvre de l'étape de propagation 210, le procédé 200 comprend une première étape 212 qui consiste à obtenir une mesure, dans le réseau de cognition sémantique 120, d'un degré de relation sémantique entre le premier nœud et le nœud environnant.

Par exemple, en référence à la figure 1, on pourra lire dans une mémoire (non représentée) du système 100 la mesure du degré de relation sémantique entre le premier nœud et un nœud environnant.

Ensuite, dans cette mise en œuvre de l'étape de propagation 210, le procédé 200 comprend une première étape de calcul 213 d'un attribut d'intérêt, dit attribut d'intérêt d'attribution calculée, pour chaque nœud environnant, en fonction de l'attribut d'intérêt d'attribution directe du premier nœud, de la fonction d'affaiblissement et de la distance associée au nœud environnant.

Enfin, dans cette une mise en œuvre de l'étape de propagation 210, le procédé 200 comprend une étape d'affectation 217 à chaque nœud environnant de l'attribut d'intérêt d'attribution calculée.

Dans un exemple de l'étape d'affectation 217, on sauvegarde l'attribut d'intérêt d'attribution calculée dans une mémoire (non représentée) du système 100 de sorte à l'associer à l'objet de données que le nœud environnant représente.

Dans un premier mode de réalisation de la mise en œuvre de l'étape de propagation 210, le procédé 200 comprend en outre une étape qui est réalisée avant la première étape 212.

En particulier, le procédé 200 comprend une première étape de vérification 211 si le nœud environnant courant comprend un attribut d'intérêt d'attribution directe.

Dans l'affirmative, le procédé 200 se poursuit à la première étape 212 pour le nœud environnant suivant, en omettant la première étape pour le nœud environnant courant.

Dans la négative, le procédé 200 se poursuit à la première étape 212 pour le nœud environnant courant.

Ainsi, dans ce premier mode de réalisation de la mise en œuvre de l'étape de propagation 210, le procédé 200 ne calcule pas d'attribut d'intérêt d'attribution calculée pour les nœuds environnants qui comprennent un attribut d'intérêt d'attribution directe (c.-à-d., qu'un utilisateur du système 100 a manuellement affecté).

Dans un deuxième mode de réalisation de la mise en œuvre de l'étape de propagation 210, le procédé 200 comprend en outre une étape qui est réalisée avant l'étape d'affectation 217 au nœud environnant courant de l'attribut d'intérêt d'attribution calculée, dit premier attribut d'intérêt d'attribution calculée.

En particulier, dans ce deuxième mode de réalisation de la mise en œuvre de l'étape de propagation 210, le procédé 200 comprend une deuxième étape de vérification 214,
- si le nœud environnant courant comprend un attribut d'intérêt d'attribution calculée, dit deuxième attribut d'intérêt d'attribution calculée, et
- si le deuxième attribut d'intérêt d'attribution calculée est supérieur au premier attribut d'intérêt d'attribution calculée.

Dans l'affirmative, le procédé 200 se poursuit à la première étape 212 pour le nœud environnant suivant, en omettant l'étape d'affectation 217 pour le nœud environnant courant.

Dans la négative, le procédé 200 se poursuit à l'étape d'affectation 217 au nœud environnant courant du premier attribut d'intérêt d'attribution calculée.

Ainsi, dans ce deuxième mode de réalisation de la mise en œuvre de l'étape de propagation 210, le procédé 200 ne remplace le précédent attribut d'intérêt d'attribution calculée des nœuds environnants, que si le nouvel attribut d'intérêt d'attribution calculée est supérieur au précédent attribut d'intérêt d'attribution calculée.

Dans un troisième mode de réalisation de la mise en œuvre de l'étape de propagation 210, le procédé 200 comprend en outre une étape qui est réalisée avant l'étape d'affectation 217 au nœud environnant courant de l'attribut d'intérêt d'attribution calculée, dit premier attribut d'intérêt d'attribution calculée.

En particulier, dans ce troisième mode de réalisation de la mise en œuvre de l'étape de propagation 210, le procédé 200 comprend une troisième étape de vérification 215,
- si le nœud environnant courant comprend un attribut d'intérêt d'attribution calculée, dit deuxième attribut d'intérêt d'attribution calculée, et
- si le deuxième attribut d'intérêt d'attribution calculée a été obtenu à partir de la propagation de l'attribut d'intérêt d'attribution directe d'un deuxième nœud du réseau de cognition sémantique 120 qui est différent du premier nœud.

Dans l'affirmative, le procédé 200 comprend une deuxième étape de calcul 216 d'une somme entre le premier attribut d'intérêt d'attribution calculée et le deuxième attribut d'intérêt d'attribution calculée.

Puis, dans ce troisième mode de réalisation de la mise en œuvre de l'étape de propagation 210, le procédé 200 comprend la poursuite du procédé 200 à l'étape d'affectation 217 pour le nœud environnant courant avec la somme.

Dans la négative, le procédé 200 se poursuit à l'étape d'affectation 217 au nœud environnant courant du premier attribut d'intérêt d'attribution calculée.

Ainsi, dans ce troisième mode de réalisation de la mise en œuvre de l'étape de propagation 210, le procédé 200 ne remplace pas le précédent attribut d'intérêt d'attribution calculée des nœuds environnants, si le nouvel attribut d'intérêt d'attribution calculée et le précédent attribut d'intérêt d'attribution calculée ont été obtenus à partir de nœuds différents. En effet, dans ce cas, on considère qu'il est plus pertinent de sommer les attributs d'intérêt.

De retour à la figure 2, le procédé 200 comprend, en réponse à la satisfaction d'une condition d'arrêt prédéterminée, une étape d'arrêt de propagation 220 de l'attribut d'intérêt d'attribution directe, sur la base d'au moins un attribut d'intérêt d'attribution calculée affecté à un nœud environnant.

Dans une première mise en œuvre particulière de l'étape d'arrêt de propagation 220, le procédé 200 comprend une première étape de comparaison 221 entre, d'une part, au moins un attribut d'intérêt d'attribution calculée affecté à un nœud environnant, et d'autre part, une première valeur de seuil prédéterminée.

Dans une deuxième mise en œuvre particulière de l'étape d'arrêt de propagation 220, le procédé 200 comprend une deuxième étape de comparaison 222 entre, d'une part, une variation d'une différence d'attributs d'intérêt d'attribution calculée pour deux nœuds environnants pris deux à deux consécutivement suivant l'ordre de propagation dans le réseau de cognition sémantique 120, et d'autre part, une deuxième valeur de seuil prédéterminée.

De retour à la figure 2, le procédé 200 comprend l'utilisation d'un attribut de confiance qui quantifie la confiance que reflète un attribut d'intérêt affecté à un nœud du réseau de cognition sémantique 120, dans le cadre du processus métier prédéterminé, un intérêt réel pour l'objet de données associé.

Dans ce mode de réalisation particulier, le procédé 200 comprend en outre les étapes suivantes.

Tout d'abord, dans ce mode de réalisation particulier, le procédé 200 comprend une étape d'affectation automatique 230 aux nœuds 121, 122, 123, 124 qui possèdent un attribut d'intérêt d'attribution directe, dits nœuds de diffusion, d'un attribut de confiance avec une première valeur.

Par exemple, la première valeur pourra valoir 1.

Enfin, le procédé 200 comprend une première étape de calcul et d'affectation 240, aux nœuds 121, 122, 123, 124 qui possèdent un attribut d'intérêt d'attribution calculée, dits nœuds de réception, d'un attribut de confiance avec une deuxième valeur inférieure à la première valeur, la deuxième valeur étant calculé à partir de la première valeur affectée à au moins l'un des nœuds de diffusion qui est lié au nœud de réception courant.

Par exemple, on pourra calculer la deuxième valeur sur la base d'une relation qui décrit une décroissance de la première valeur en fonction du nombre de liaisons sémantiques que possède le nœud de réception.

### Deuxième objet de l'invention : estimation de l'intérêt d'une source de données

Un autre objet de l'invention est d'estimer l'intérêt, également appelé réputation, d'une source de données en fonction de l'intérêt porté aux objets de données qui en sont issus.

De retour à la figure 2, le procédé 200 comprend deuxième une étape de calcul et d'affectation 250 à la source de données, d'un attribut de réputation qui quantifie la réputation de la source de données sur la base au moins des attributs d'intérêt qui sont affectés aux nœuds 121, 122, 123, 124 représentatifs des objets de données qui sont issus de la source de données.

Dans un exemple, l'attribut de réputation est un indice de valeur qui est fonction du nombre de citations de la source de données et de l'intérêt des objets contenus.

Dans une mise en œuvre particulière de la deuxième étape de calcul et d'affectation 250 lorsqu'elle dépend de l'étape d'affectation automatique 230, dans laquelle on utilise un attribut de confiance, le procédé 200 comprend en outre une troisième étape de calcul et d'affectation 260, à la source de données, d'un attribut de confiance avec une valeur qui est calculée à partir des attributs de confiance des nœuds 121, 122, 123, 124 représentatifs des objets de données qui sont issus de la source de données.

L'invention concerne également un support d'enregistrement qui enregistre un programme d'instructions qui peut être exécuté par un processeur pour exécuter toutes les étapes du procédé 200 tel que décrit ci-dessus.

De manière non limitative, il peut s'agir d'un disque dur, d'un CD-ROM, d'un DVD, d'une disquette, d'une cassette ou d'une clé USB.

L'invention peut faire l'objet de nombreuses variantes et applications autres que celles décrites ci-dessus.

Par exemple, dans une première mise en œuvre particulière, la condition de déclenchement comprend l'affectation d'un attribut d'intérêt d'attribution directe à un nœud du réseau de cognition sémantique 120.

Aussi, dans une deuxième mise en œuvre particulière, la condition de déclenchement comprend le changement d'un paramètre lié au mécanisme de propagation.

Par ailleurs, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire, comme de simples juxtapositions. En outre, les caractéristiques structurelles et/ou fonctionnelles des différents modes de réalisation décrits ci-dessus peuvent faire l'objet en tout ou partie de juxtaposition ou de combinaison différente.

## Revendications

1. Procédé (200) mis en œuvre par ordinateur destiné à être utilisé dans un système d'analyse de données, ledit système d'analyse de données étant configuré pour,
- recevoir au moins un fichier de données comprenant des objets de données, chacun des objets de données incluant au moins un attribut,
- extraire les objets de données du fichier de données,
- créer un réseau de cognition sémantique (120) à partir des attributs de tout ou partie des objets de données, le réseau de cognition sémantique (120) définissant des relations sémantiques (125) entre des nœuds (121, 122, 123, 124) qui sont représentatifs des objets de données, et
- autoriser un utilisateur à sélectionner et affecter manuellement à au moins un premier nœud du réseau de cognition sémantique (120), un attribut d'intérêt, dit attribut d'intérêt d'attribution directe, qui, dans le cadre d'un processus métier prédéterminé, est représentatif d'un intérêt de l'utilisateur pour l'objet de données associé au premier nœud,
le procédé étant **caractérisé en ce qu'**il comprend, en réponse à l'apparition d'une condition de déclenchement qui implique au moins un changement au niveau du réseau de cognition sémantique (120),
- une étape de propagation (210) de l'attribut d'intérêt d'attribution directe du premier nœud à des nœuds environnants (121, 122, 123, 124) du premier nœud, suivant un ordre de propagation dans le réseau de cognition sémantique (120) et sur la base d'une fonction d'affaiblissement de l'attribut d'intérêt d'attribution directe qui dépend de la nature de la relation entre le premier nœud et les nœuds environnants (121, 122, 123, 124).

2. Procédé (200) selon la revendication 1 dans lequel, la nature de la relation inclut une distance de réseau entre le premier nœud et les nœuds environnants (121, 122, 123, 124), et dans lequel l'étape de propagation (210) comprend,
- une première étape (212) qui consiste à calculer une distance, dans le réseau de cognition sémantique (120), entre une position du premier nœud et une position de chaque nœud environnant,
- une première étape de calcul (213) d'un attribut d'intérêt, dit attribut d'intérêt d'attribution calculée, pour chaque nœud environnant, en fonction de l'attribut d'intérêt d'attribution directe du premier nœud, de la fonction d'affaiblissement et de la distance associée au nœud environnant, et
- une étape d'affectation (217) à chaque nœud environnant de l'attribut d'intérêt d'attribution calculée.

3. Procédé (200) selon la revendication 1 dans lequel, la nature de la relation inclut une mesure d'importance de la relation sémantique, dit degré de relation, entre le premier nœud et les nœuds environnants (121, 122, 123, 124), et dans lequel l'étape de propagation (210) comprend,
- une première étape (212) qui consiste à obtenir une mesure, dans le réseau de cognition sémantique (120), d'un degré de relation sémantique entre le premier nœud et le nœud environnant,
- une première étape de calcul (213) d'un attribut d'intérêt, dit attribut d'intérêt d'attribution calculée, pour chaque nœud environnant, en fonction de l'attribut d'intérêt d'attribution directe du premier nœud, de la fonction d'affaiblissement et de la mesure du degré de relation sémantique entre le premier nœud et le nœud environnant, et
- une étape d'affectation (217) à chaque nœud environnant de l'attribut d'intérêt d'attribution calculée.

4. Procédé (200) selon l'une quelconque des revendications 2 à 3, comprenant en outre, avant la première étape (212),
- une première étape de vérification (211) si le nœud environnant courant comprend un attribut d'intérêt d'attribution directe, et
- dans l'affirmative, la poursuite du procédé (200) à la première étape (212) pour le nœud environnant suivant, en omettant la première étape (212) pour le nœud environnant courant, ou
- dans la négative, la poursuite du procédé (200) à la première étape (212) pour le nœud environnant courant.

5. Procédé (200) selon l'une quelconque des revendications 2 à 4, comprenant en outre, avant l'étape d'affectation (217) au nœud environnant courant de l'attribut d'intérêt d'attribution calculée, dit premier attribut d'intérêt d'attribution calculée,
- une deuxième étape de vérification (214) si le nœud environnant courant comprend un attribut d'intérêt d'attribution calculée, dit deuxième attribut d'intérêt d'attribution calculée, et si le deuxième attribut d'intérêt d'attribution calculée est supérieur au premier attribut d'intérêt d'attribution calculée, et
- dans l'affirmative, la poursuite du procédé (200) à la première étape (212) pour le nœud environnant suivant, en omettant l'étape d'affectation (217) pour le nœud environnant courant, ou
- dans la négative, la poursuite du procédé (200) à l'étape d'affectation (217) au nœud environnant courant du premier attribut d'intérêt d'attribution calculée.

6. Procédé (200) selon l'une quelconque des revendications 2 à 4, comprenant en outre, avant l'étape d'affectation (217) au nœud environnant courant de l'attribut d'intérêt d'attribution calculée, dit premier attribut d'intérêt d'attribution calculée,
- une troisième étape de vérification (215) si le nœud environnant courant comprend un attribut d'intérêt d'attribution calculée, dit deuxième attribut d'intérêt d'attribution calculée, et si le deuxième attribut d'intérêt d'attribution calculée a été obtenu à partir de la propagation de l'attribut d'intérêt d'attribution directe d'un deuxième nœud du réseau de cognition sémantique (120) qui est différent du premier nœud, et
- dans l'affirmative, le procédé (200) comprend une deuxième étape de calcul (216) d'une somme entre le premier attribut d'intérêt d'attribution calculée et le deuxième attribut d'intérêt d'attribution calculée, et la poursuite du procédé (200) à l'étape d'affectation (217) pour le nœud environnant courant avec la somme, ou
- dans la négative, la poursuite du procédé (200) à l'étape d'affectation (217) au nœud environnant courant du premier attribut d'intérêt d'attribution calculée.

7. Procédé (200) selon l'une quelconque des revendications 1 à 6 comprenant en outre, en réponse à la satisfaction d'une condition d'arrêt prédéterminée,
- une étape d'arrêt de propagation (220) de l'attribut d'intérêt d'attribution directe, sur la base d'au moins un attribut d'intérêt d'attribution calculée affecté à un nœud environnant.

8. Procédé (200) selon la revendication 7, dans lequel l'étape d'arrêt de propagation (220) de l'attribut d'intérêt comprend une première étape de comparaison (221) entre, d'une part, au moins un attribut d'intérêt d'attribution calculée affecté à un nœud environnant, et d'autre part, une première valeur de seuil prédéterminée.

9. Procédé (200) selon la revendication 7, dans lequel l'étape d'arrêt de propagation (220) de l'attribut d'intérêt comprend une deuxième étape de comparaison (222) entre, d'une part, une variation d'une différence d'attributs d'intérêt d'attribution calculée pour deux nœuds environnants (121, 122, 123, 124) pris deux à deux consécutivement selon l'ordre de propagation, et d'autre part, une deuxième valeur de seuil prédéterminée.

10. Procédé (200) selon l'une quelconque des revendications 1 à 9, dans lequel les nœuds environnants (121, 122, 123, 124) sont sélectionnés parmi : un nombre de nœuds (121, 122, 123, 124) qui sont des enfants du premier nœud, un nombre de nœuds (121, 122, 123, 124) qui sont apparentés au premier nœud, et un nombre de nœuds (121, 122, 123, 124) qui sont des enfants d'un nombre de nœuds (121, 122, 123, 124) qui sont apparentés au premier nœud.

11. Procédé (200) selon l'une quelconque des revendications 1 à 10, dans lequel la fonction d'affaiblissement est une fonction sélectionnée parmi : une fonction de décroissance exponentielle, une fonction de décroissance constante, une fonction de décroissance par palier, une fonction de décroissance linéaire, et une fonction de décroissance compacte et homogène (« smooth-compact decay function », en anglais).

12. Procédé (200) selon l'une quelconque des revendications 1 à 11, dans lequel la condition de déclenchement comprend un changement sélectionné parmi : un changement de la topologie du réseau de cognition sémantique (120), l'affectation d'un attribut d'intérêt d'attribution directe à un nœud du réseau de cognition sémantique (120) et le changement d'un paramètre lié au mécanisme de propagation.

13. Procédé (200) selon l'une quelconque des revendications 1 à 12, comprenant l'utilisation d'un attribut de confiance qui quantifie la confiance que reflète un attribut d'intérêt affecté à un nœud du réseau de cognition sémantique (120), dans le cadre du processus métier prédéterminé, un intérêt réel pour l'objet de données associé,
dans lequel le procédé (200) comprend en outre les étapes suivantes,
- une étape d'affectation automatique (230) aux nœuds (121, 122, 123, 124) qui possèdent un attribut d'intérêt d'attribution directe, dits nœuds de diffusion, d'un attribut de confiance avec une première valeur, et
- une première étape de calcul et d'affectation (240), aux nœuds (121, 122, 123, 124) qui possèdent un attribut d'intérêt d'attribution calculée, dits nœuds de réception, d'un attribut de confiance avec une deuxième valeur inférieure à la première valeur, la deuxième valeur étant calculé à partir de la première valeur affectée à au moins l'un des nœuds de diffusion qui est lié au nœud de réception courant.

14. Procédé (200) selon l'une quelconque des revendications 1 à 13, dans lequel le fichier de données provient d'au moins une source de données, le procédé (200) comprenant une deuxième étape de calcul et d'affectation (250) à la source de données, d'un attribut de réputation qui quantifie la réputation de la source de données sur la base au moins des attributs d'intérêt qui sont affectés aux nœuds (121, 122, 123, 124) représentatifs des objets de données qui sont issus de la source de données.

15. Procédé (200) selon la revendication 14 lorsqu'elle dépend de la revendication 13, comprenant en outre une troisième étape de calcul et d'affectation (260), à la source de données, d'un attribut de confiance avec une valeur qui est calculée à partir des attributs de confiance des nœuds (121, 122, 123, 124) représentatifs des objets de données qui sont issus de la source de données.
